# EUROPEAN PATENT APPLICATION

(11) **EP 3 825 877 A1**
(43) Date of publication of application: **26.05.2021**
(21) Application number: 20000316.8
(22) Date of filing: 28.08.2020
(51) Int. Cl.: G06F 16/958

(54) **SYSTEM AND METHOD FOR THE MANAGEMENT OF A WEBSITE**

(30) Priority: 05.09.2019 IT 201900015698
(71) Applicant: Ergonet S.r.l., 01027 Montefiascone (VT) (IT)
(72) Inventor: LUSTRI, Alessio, 01100 Viterbo (VT) (IT); CAPOCECERA, Pierluigi, 01027 Montefiascone (VT) (IT); ASSENZIO, Fabio, 10093 Collegno (TO) (IT)
(74) Representative: Maiello, Helenio Francesco

(57) **Abstract**

A method for managing a website comprises the steps of sending by at least one user of a request to the host server on which the original web space associated with the website to be modified resides for the modification of the associated website, cloning of the web space by the host server on a staging server for copying the web space and generating a cloned website with a corresponding work or staging environment. accessing to the staging server by the user through the URL of the website for modifying the cloned website directly on the staging server, transferring of the cloned and modified website on the host server for the publication thereof on the web, wherein the host server and the staging server have the same software and hardware configuration.

## Description

### Technical Field

The present invention finds application in the sector of systems and methods for digital processing or data processing and has in particular as its object a system and a method for managing a website and in particular for modifying the contents within a web space associated with the website.

### State of the art

As known, CMS (Content Management System) are services that allow the management of web content directly by the user who owns the associated web space to allow the modification and updating of the website contents.

The well-known solutions range from in-depth custom development, using existing programming environments, to manual content updates.

Typically, the custom and in-depth development of a content management solution with existing programming environments requires professional services from experienced web developers, with generally high time and cost.

The advent of open source CMS has certainly simplified the creation of sites by leaving the user free from the obligation to have programming skills and allowing him to focus solely on the content to be published.

However, this facilitation has introduced some critical issues in the management and updating of the selected web platform.

In particular, the installation of security updates is one of the most delicate steps in the life of a CMS. Should an incompatibility or a conflict occur during this procedure, there is nothing left to do but to try to restore a backup copy.

Furthermore, the current staging solutions on the market are linked to the specific selected CMS and are not compatible with all platforms.

In addition, access to the staging service requires that the administrator user access a subdomain to view and interact with the staging copy, resulting in the need to modify paths, serialized data in the database, configuration files or other.

Therefore, these solutions inevitably require knowledge of the structure of the application to be staged, in order to modify it, drastically reducing the number of CMS supported and in general making it absolutely impossible to perform staging on proprietary code, for obvious reasons of unpredictability.

### Scope of the invention

The object of the present invention is to overcome the above drawbacks by providing a system and a method for the management of a website that allow a user to operate on a web space for the modification of the contents thereof in totally safe conditions and with the guarantee of full compatibility in the subsequent publication step.

A particular object is to provide a system and a method for the management of a website that guarantee that the production site undergoing the staging works in exactly the same way and that, once the desired changes have been made and the updates applied, the site brought back to production works consistently with the simulations performed by the administrator in the staging environment.

Still another object is to provide a system and a method for managing a website which allow to provide a staging service compatible with any platform and that does not require application changes.

Still another object is to provide a system and a method for managing a website which allow extremely short set-up times for the staging environment.

These objects, as well as others that will become more apparent hereinafter, are achieved by a system for the management of a website which, in accordance with claim 1, comprises the steps of sending by at least one user a request to the server host on which resides the original web space associated with the website to be modified for the modification of said associated website, cloning of said web space by said host server on a staging server for the copy of said web space and the generation of a cloned web site with a corresponding work or staging environment, access to said staging server by the user through said URL for the modification of said cloned website directly on said staging server, transfer of said cloned and modified website to said host server for its publication on the web, wherein said host server and said staging server have the same hardware and software configuration.

Advantageous embodiments of the invention are obtained in accordance with the dependent claims.

### Brief disclosure of the drawings

Further features and advantages of the invention will become more apparent in the light of the detailed description of a preferred but not exclusive embodiment of the system and of the method according to the invention, illustrated by way of non-limiting example with the aid of the accompanying drawing table wherein:

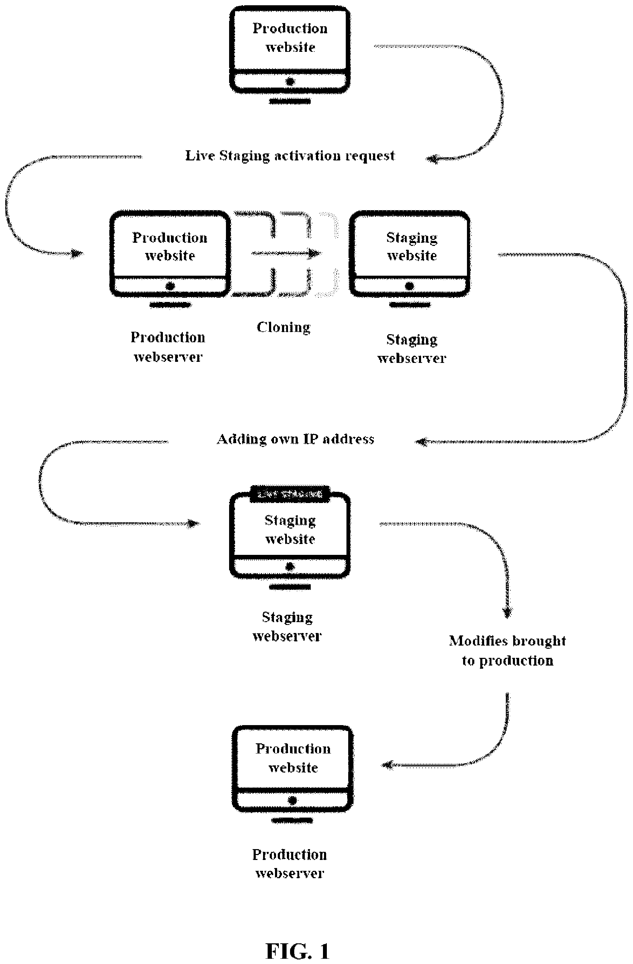

**FIG. 1** is a diagram showing the system architecture and the operation of the related method.

### Best mode of carrying out the invention

**Fig. 1** shows a possible operating mode in accordance with the present invention for the management of a website in order to make changes and/or updates to the associated web space and the contents thereof.

In particular, the method according to the invention for the management of a website, provides that the user, who can be either the owner of the domain associated with the website to be managed or the system administrator or webmaster, sends (step a) to the same host server that hosts the web space a request for modification of the website associated with the web space.

Following this request, the host server proceeds (step b) with the cloning of the web space on a staging server so that a copy of the cloned website is generated on this server.

In particular, the system that manages the entire procedure may be provided with a plurality of staging nodes or servers and in this case the production web space may be copied to any of the staging nodes that will be free at the moment.

In this step we will proceed to an integral copy or snapshot of the filesystem of the web space to be modified and of the databases associated therewith, without alterations which could lead to unexpected behavior.

At the same time, the user will be given the opportunity to exclude one or more folders from the copy.

The user will be able to access (step c) the staging server through the same URL as the original website, and without the need to use a subdomain, in order to operate within the staging environment and make changes and/or updates to the cloned website directly on the staging server.

In this way, the system does not need to alter the application/CMS in any way to activate the staging environment.

It follows that it is not necessary to modify paths, serialized data in the database, configuration files or other, unlike the well-known staging solutions that refer to a subdomain, alternative domain name or subfolder, which instead must inevitably know and be able to appropriately modify the structure of the application to be staged. Once the user has completed the changes and/or updates, he will be able to proceed with the necessary checks and simulations of use to be sure that the original website in production works according to expectations.

At this point, the user may send the staging server a request (phase d) for the transfer of the cloned and modified website on the host server for its publication on the web.

In order to ensure complete identity between the cloned and modified website with the original website in production as published, the host server and the staging server will have the same hardware and software configuration, i.e. each application package, each library, configuration and, in general, the entire software ecosystem will be perfectly identical to each other, so that the staging environment is totally identical to the production one in order to eliminate any risk of incompatibility in the subsequent step of content publication.

Access to the staging server will be made possible only through one or more IP addresses defmed and authorized by the user himself.

In this way, the user may allow access to the staging environment to one or more authorized operators or users, who will access the staging environment always through the URL of the website and always without having to resort to subdomains.

The insertion of authorized IP addresses may be performed simultaneously with the creation of the staging space and the cloning of the website.

Furthermore, it will be possible to change the enabled IP addresses at any time as well as temporarily suspend the staging environment and reactivate it later without losing the work done.

The system will manage the accesses to the host server and to the staging server on the basis of the IP addresses from which the request for access to the URL of the website arrives through a reverse proxy able to sort the access requests coming from IP addresses not authorized by the user to the original website and requests from authorized IP addresses to the cloned website.

In this way it will also be possible to make the developments available in preview to certain IP addresses, for example showing to the own client the work done before it is published and made accessible to everyone.

Advantageously, the staging environment will not share any computational resources, such as CPU, RAM, I/O, bandwidth, with the production environment associated with the original production web space.

In this way, any errors, delays or other technical difficulties will not have repercussions on production.

In addition, the time for cloning the site and setting up the staging environment will be extremely short, in the order of a few minutes from the request.

According to a further particularly advantageous aspect, when creating the staging environment, it will be possible to define a PHP version different from the production one to check the compatibility of the own applications with new PHP releases.

From an operational point of view, in order to allow the user to operate safely and recognize the production environment, i.e. the original website, from the staging website, which would otherwise be perfectly identical, the latter may be distinguished by a graphic mark.

Purely by way of example, the cloned website may have a colored band or other mark, the position of which on the monitor may also be changed if it represents an obstacle to viewing certain contents.

From what has been described, it is evident that the present invention achieves the intended objects and in particular that of making available to the user a staging environment totally identical to the production one, to test updates, make structural changes (for example, changing the template graphic), configure and fine-tune new plugins and components, minimizing the difficulty of testing the evolution of the website, to make the work visible only at the end and with the guarantee that everything works correctly.

On the contrary, if you are not satisfied with the result achieved, you can delete the clone and start again, without having to create backup copies.

The system and the method according to the invention are susceptible of numerous modifications and variations, all of which fall within the inventive concept expressed in the attached claims. All the details may be replaced by other technically equivalent elements, and the materials and tools may be different according to the needs, without departing from the scope of protection of the present invention.

## Claims

1. A method for managing a website, comprising the following steps:
a) sending by at least one user of a request to the host server on which the original web space associated with the website to be modified resides for the modification of said associated website;
b) cloning said web space by said host server on a staging server for copying said web space and generating a cloned website with a corresponding work or staging environment;
c) accessing to said staging server by the user through the URL of the website for modifying said cloned website directly on said staging server;
d) transferring said cloned and modified website on said host server for the publication thereof on the web;
wherein said host server and said staging server have the same software and hardware configuration.

2. Method as claimed in claim 1, **characterized in that** said website cloning step b) provides an integral copy of the filesystem of said web space to be modified and of the databases associated therewith.

3. Method as claimed in claim 2, **characterized in that** the user has the possibility to exclude one or more folders from the copy.

4. Method as claimed in any preceding claim, **characterized in that** the user can define one or more IP addresses authorized to access said staging server, the access to said staging server being possible only through said one or more IP addresses authorized by the user.

5. Method as claimed in claim 4, **characterized in that** the requests for access to the URL of said website are managed by a reverse proxy designed to sort the access requests coming from IP addresses not authorized by the user to the original website and requests from authorized IP addresses to the cloned website.

6. Method as claimed in any preceding claim, **characterized in that** the staging environment does not share any computational resource with the production environment associated with said original web space.

7. Method as claimed in claim 6, **characterized in that** the staging environment is distinguished by said production environment by means of a graphic marking.

8. A system for managing a website, comprising:
- a host server where the original web space associated with the website to be modified resides and which is adapted to receive at least one user's request for modifying said website;
- one or more staging servers for the copy of said website and the generation of a cloned website with a corresponding work or staging environment;
wherein said host server and said one or more staging servers have the same software and hardware configuration.

9. System as claimed in claim 8, comprising a reverse proxy adapted to sort the access requests coming from IP addresses not authorized by the user to the original website and the requests coming from authorized IP addresses to the cloned website.

10. System as claimed in claim 8 or 9 for carrying out a method according to one or more of the preceding claims.
